(19) Europäisches Patentamt

European Patent Office

Office européen des brevets

(11) Veröffentlichungsnummer : **0 129 663**
**B1**

(12) **EUROPÄISCHE PATENTSCHRIFT**

(45) Veröffentlichungstag der Patentschrift :
**25.05.88**

(21) Anmeldenummer : **84104474.6**

(22) Anmeldetag : **19.04.84**

(51) Int. Cl.⁴ : **B 01 D 13/00**

(30) Priorität : **30.04.83 DE 3315821**
**28.12.83 DE 3347283**

(43) Veröffentlichungstag der Anmeldung :
**02.01.85 Patentblatt 85/01**

(45) Bekanntmachung des Hinweises auf die Patenterteilung : **25.05.88 Patentblatt 88/21**

(84) Benannte Vertragsstaaten :
**DE FR GB IT NL SE**

(56) Entgegenhaltungen :
**DE-A- 2 652 605**
**DE-A- 3 005 408**
**DE-A- 3 028 398**

(73) Patentinhaber : **GKSS-Forschungszentrum Gees-thacht GmbH**
**Max-Planck-Strasse**
**D-2054 Geesthacht (DE)**

(72) Erfinder : **Timm, Hans**
**Osterheese 6**
**D-2054 Geesthacht 6 (DE)**
Erfinder : **Griesbach, Heinz**
**Brunnenweg 5**
**D-2054 Geesthacht (DE)**

(74) Vertreter : **Schöning, Hans-Werner, Dipl.-Ing. et al**
**RECHTSANWÄLTE Dr. Harmsen, Dr. Utescher Dipl.-Chem Harmsen, Bartholatus Dr. Schaeffer, Dr. Fricke PATENTANWÄLTE Dr. Siewers, Dipl.-Ing. Schöning**
**Adenauerallee 28**
**D-2000 Hamburg 1 (DE)**

(54) **Membrankissen.**

## Beschreibung

Die Erfindung betrifft ein Membrankissen für Wasserentsalzung durch Umkehrosmose, Ultrafiltration, Hyperfiltration, Gaspermeation und dgl., gemäß dem Oberbegriff des Patentanspruchs 1.

Membrankissen dieser Art sind bekannt (DE-C-29 45 317), die sich zwar in der Praxis als sehr geeignet herausgestellt haben, deren Herstellungskosten im einzelnen jedoch sehr hoch sind, da es unbedingt erforderlich ist, daß jedes einzelne Membrankissen über den gesamten Umfang einwandfrei abgedichtet ist. Ein Leck am Umfang lediglich eines Membrankissens führt in der Praxis zu einem vollständigen Ausfall einer Filtrationsanlage, die in sogenannten Modulen mit einer Vielzahl stapelartig aufeinandergeschichteter Membrankissen ausgerüstet sind. Um eben diese Dichtheit der Membrankissen zu erreichen, wurden bisher die beiden außenliegenden Membranfolien größer gemacht als die innenliegenden Abstandshalter und die ggf. vorgesehene Trennfolie. Um das zu erreichen, mußten in gesonderten Herstellungsschritten zunächst die flächenmäßig kleineren Abstandshalter oder auch die ggf. vorgesehene gleichgroße Trennfolie gestanzt bzw. geschnitten werden und in einem anderen gesonderten Verfahrensgang die beiden flächenmäßig größeren außenliegenden Membranfolien. Neben diesen gesonderten Verfahrensschritten ist es auch bisher erforderlich gewesen, daß zur Schaffung des fertigen Membrankissens die zwischen den Membranfolien liegenden inneren Kissenteile nicht in die Verbindung der Membranfolien eindringen durften, da sonst eine dichtende Verbindung der Membranfolien an den Rändern nicht möglich war. Das erforderte vor Ausführung des Verbindungsvorganges ein genaues Ausrichten der innenliegenden flächenkleineren Kissenteile relativ zu den außenliegenden Membranfolien, was neben dem gesonderten Stanz- bzw. Schneidschritt die Herstellungskosten nochmals vergrößerte.

Es ist Aufgabe der vorliegenden Erfindung, ein Membrankissen zu schaffen, daß zur Verwendung als Massenartikel sehr einfach und kostengünstig herstellbar ist und den auftretenden Drücken ohne Dichtigkeitsverlust zu widerstehen vermag. Gelöst wird die Aufgabe gemäß der Erfindung dadurch, daß die Membrankissenschichten aus Stoffen bestehen, deren Schmelzpunkte nahe beieinander liegen, und daß alle Schichten des Membrankissens flächengleich sind und in einer ringsum verlaufenden Randzone durchgehend miteinander verschweißt sind.

Der Vorteil eines derartigen Membrankissens liegt im wesentlichen darin, daß sämtliche Membrankissenschichten, d. h. die außenliegenden Membranfolien, der oder die innenliegenden Abstandshalter und die ggf. noch dazwischenliegend, angeordnete Trennfolie in einem Schweißvorgang in ihren Randbereichen hermetisch abgedichtet werden können, wobei sich als Material für die Membranschichten vor allem Kunststoffe aber auch Stoffe auf Celluloseacetat-Basis vorzugsweise eignen.

Sofern als Abstandshalter eine Gewebe- oder Vliesschicht vorgesehen ist, die nicht ohne weiteres mit den benachbarten Membranfolien kompatibel ist, kann sie beispielsweise im Randbereich mit einem Kunststoff getränkt oder gefüllt werden, der die gewünschte Kompatibilität mit den Membranfolien und der ggf. vorgesehenen Trennfolie hat.

Die Membrankissen haben eine rechteckige, vorzugsweise quadratische Fläche, wobei dann die mittig angeordneten durchgehenden Abflußbohrungen mit gegenseitigem Abstand a und einem Randabstand a/2 angeordnet sind, wenn die Kissenfläche das Format a x a x n hat bei beliebigem ganzzahligen n.

Aus der DE-A-30 28 398 ist eine Vorrichtung für die Ultrafiltration organischer Flüssigkeiten, beispielsweise zur Behandlung von Blut zum Einsatz als künstliche Niere, zur Durchführung von Plasmapherese, zur Konzentration und zur Hochreinigung von Eiweißlösungen u. dgl. bekannt, in der in ihrem Aufbau zweiseitig offene Membrankissen verwendet werden. Die Ultrafiltration organischer Flüssigkeiten erfolgt bei im Vergleich zur Wasserentsalzung sehr niedrigen Drücken, die in der Regel kleiner als 5 bar sind. Bei Membrankissen dieser Anwendungsart ist die Art der Ausbildung ihrer Anströmkante, d. h. die Kante, an der das Blut das Membrankissen zuerst berührt, von großer Wichtigkeit. Es muß auf alle Fälle vermieden werden, daß die Anströmkante den Blutstrom dazu veranlaßt, turbulent über das Membrankissen zu fließen, was möglicherweise eine Hämolyse oder Blutgerinnung bewirken würde.

Um eine entsprechende Anströmkante an diesen ansonsten zweiseitig offenen Membrankissen zu bilden, wird eine zwischen den Membranfolien liegende Membranstütze zunächst in einem gesonderten Kalandrierungsschritt oder durch Schmelzverformung in eine folienförmige, weitgehend geschlossene Oberfläche verformt und anschließend entweder durch thermische Behandlung, durch Kleben oder durch Anlösen der Kunststoffoberfläche verbunden.

Ein anderes Membranelement, das zur Hämofiltration verwendet wird (DE-A-30 05 408), wird u. a. durch ein flaches Rohr gebildet, das an zwei Seiten offen ist, wobei im zusammengefalteten Zustand die Enden des gefalteten Streifens durch Heißversiegeln miteinander verbunden sind. Von den vier möglichen Seiten des gebildeten flachen Rohres ist lediglich eine miteinander verbunden. Im übrigen ist es bekannt, daß Heißsiegeln im Gegensatz zu Schweißen einen gesonderten Heißsiegelzusatz erfordert.

Die Ränder eines Membranelementes zu verschweißen, um den Rand gegen Außendruck zu dichten, ist zwar bekannt (DE-A-26 52 605), hierbei wird jedoch eine zwischen den eigentlichen Membranen angeordnete poröse Trennwand eingeschlossen, ohne daß diese in die Schweißverbindung am Rand der Membrane eingeschlossen ist.

Weitere Einzelheiten der Erfindung ergeben sich aus den abhängigen Ansprüchen.

Nachfolgend wird die Erfindung anhand der beigefügten Zeichnung beispielhaft erläutert.

In den Zeichnungen zeigen :

Fig. 1 eine Draufsicht auf ein erfindungsgemäßes Membrankissen,

Fig. 2 einen Querschnitt gemäß der Schnittlinie II-II der Fig. 1 bei 5-lagiger Ausführung und

Fig. 3 einen Querschnitt gemäß der Schnittlinie II-II der Fig. 1 bis 3-lagiger Ausführung.

Das erfindungsgemäße Membrankissen in fünflagiger Ausführung besteht entsprechend dem Stande der Technik aus zwei außenliegenden Membranfolien 11, 12, zwei vorzugsweise von einer Gewebe- oder Vliesschicht gebildeten Abstandsschaltern 21, 22 und einer mittig angeordneten Trennschicht 3.

Die Trennschicht 3 hat vorzugsweise eine größere Oberflächenhärte als die benachbarten Abstandshalter, so daß die durch die Membranflächen 11, 12 hindurchgetretenen Medien entlang der Abstandshalterschicht zu mittig angeordneten Abflußbohrungen 5 strömen können.

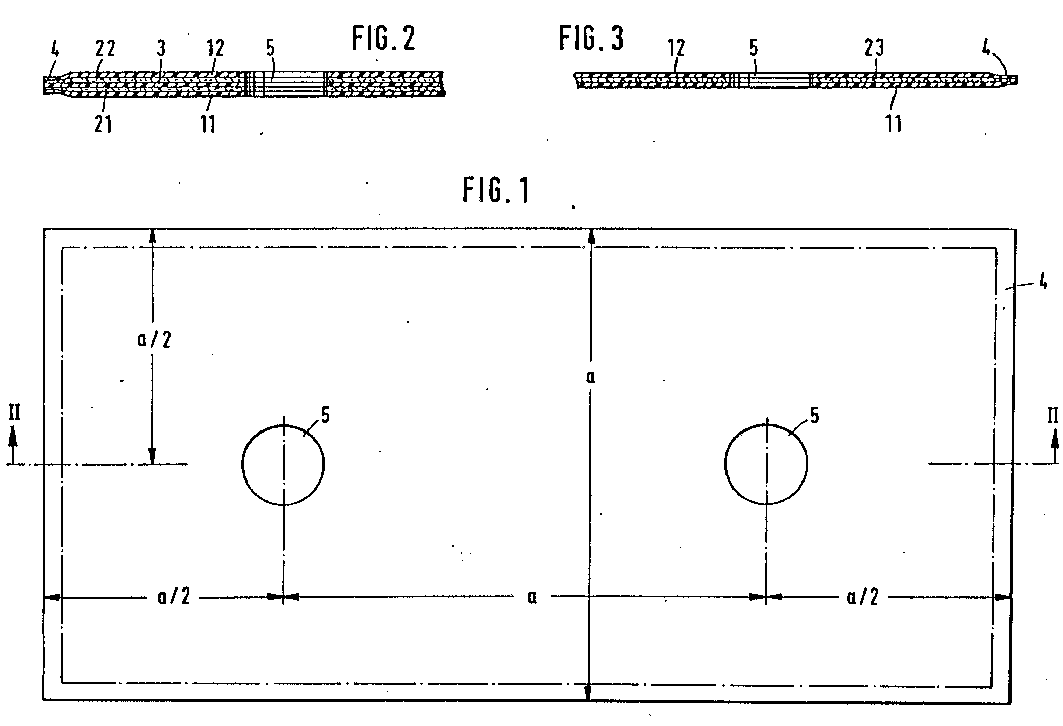

Da die durch die beiden äußeren Membranen 11 und 12 hindurchgelassenen Permeate sich an den Abflußbohrungen 5 vereinigen, besteht erfindungsgemäß auch die Möglichkeit, anstelle der beiden Abstandshalter 11 und 12 und der Trennschicht 3 gemäß Fig. 2 nur einen einzigen blattförmigen Abstandshalter 23 zu verwenden. Diese Maßnahme führt dann auch dazu, daß sich die Membrankissendicke vermindert, so daß in einem gleichen Modulvolumen eine größere Filterschicht ausgebildet werden kann.

Alle Schichten des Membrankissens haben flächengleiche Abmessungen. Bei der Herstellung werden diese drei oder fünf Schichten deckungsgleich flach aufeinander gestapelt und in einer ringsum laufenden Randzone 4 dichtend verschweißt.

Eine absolut dichte Randverschweißung wird erzielt, wenn gemäß der vorliegenden Erfindung für alle Schichten Stoffe verwendet werden, die ähnliche physikalische und/oder chemische Eigenschaften, d. h. eng beieinander liegende Schmelzpunkte haben. Geeignete Materialien für die Schichten (wobei die komplex aufgebaute Membranschicht als eine Schicht angesehen wird) sind beispielsweise Kunststoffe aus der Gruppe Polypropylen, Polyester, Polyaether, Polyamid, Polyimid, Polysulfon u. dgl., aber auch Stoffe auf Celluloseacetat-Basis. Im Rahmen der Erfindung liegt es jedoch auch, Abstandshalter aus einem Gewebe oder Vlies anderer Stoffe zu verwenden, wobei man dieses Gewebe oder Vlies am Rand mit einem kompatiblen Material tränkt oder füllt.

Die Randverschweißung 4 des erfindungsgemäßen Membrankissens wird — auch im Falle von nassen Membranen — vorzugsweise mit Ultraschall vorgenommen.

Die die Membrankissen durchsetzenden mittigen Kissenbohrungen 5 werden vorzugsweise so angeordnet, daß die die Membranflächen durchdringenden Medien auf kürzestem Wege zu einem Abfluß gelangen können. Aus vorstehendem Grunde werden die erfindungsgemäßen Membrankissen rechteckig ausgestaltet, wobei die Längskante des Membrankissens vorzugsweise doppelt so groß ist wie die Querabmessung. Bei einem solchen rechteckigen Kissen entspricht die Anzahl der Kissenbohrungen 5 dem Verhältnis von Längsseite zu Querseite des Kissens. Hat ein Kissen wie in Fig. 1 angedeutet, die Abmessungen a x 2a, sind zwei Bohrungen 5 vorgesehen, die voneinander einen Abstand a und vom Rand einen Abstand a/2 haben.

**Patentansprüche**

1. Membrankissen für Wasserentsalzung durch Umkehrosmose, Ultrafiltration, Hyperfiltration, Gaspermeation oder dgl., bestehend aus flach aufeinander liegenden Schichten rechteckiger Form, wobei die beiden Außenschichten strömungsmitteldicht entlang ihrer Ränder verbundene Membranfolien (11, 12) sind, deren Außenflächen dem Zustrom ausgesetzt sind, und wobei ein oder mehrere innere, den Permeatabfluß zu einer oder mehrere mittig die Schichten durchsetzenden Kissenbohrungen (5) ermöglichende blattförmige Abstandshalter (23 ; 21, 22) als Innenschichten vorhanden sind, dadurch gekennzeichnet, daß alle Schichten (11, 12 ; 23, 21, 22) des Membrankissens aus Stoffen bestehen, deren Schmelzpunkte nahe beieinander liegen, und daß alle Schichtenflächengleich sind und in einer ringsum verlaufenden Randzone (4) durchgehend miteinander verschweißt sind.

2. Membrankissen nach Anspruch 1, dadurch gekennzeichnet, daß bei zwei Abstandshaltern (21, 22) eine mittig dazwischen angeordnete flächengleiche Schicht einer Trennfolie (3) vorgesehen ist.

3. Membrankissen nach Anspruch 1 und 2, dadurch gekennzeichnet, daß die mittlere Trennfolie (3) eine größere Oberflächenhärte aufweist als die benachbarten Abstandshalter (21, 22).

4. Membrankissen nach Anspruch 1 bis 3, dadurch gekennzeichnet, daß die Randverschweißung (4) eine durch Ultraschall erzeugte Schweißnaht ist.

5. Membrankissen nach Anspruch 1 bis 4, dadurch gekennzeichnet, daß die Abstandshalter (21, 22) von einer Kunststoff-, Gewebe- oder Vliesschicht gebildet sind.

6. Membrankissen nach Anspruch 5, dadurch gekennzeichnet, daß die Gewebe- oder Vliesschicht eine Fadenstärke und Maschenweite in einer Größenordnung von etwa 200 Mikron hat.

7. Membrankissen nach Anspruch 1 bis 6, dadurch gekennzeichnet, daß die rechteckige Fläche ein Format a x a x n hat und daß die mittig angeordneten durchgehenden n Abflußbohrungen (5) mit einem gegenseitigen Abstand a und einem Randabstand a/2 angeordnet sind, wobei n ein ganzzahliger Wert ist und vorzugsweise 2 beträgt,

## Claims

1. A membrane pad for the demineralization of water by reverse osmosis, ultrafiltration, hyperfiltration, gas permeation or the like, consisting of layers of rectangular shape lying flat one on the other, wherein the two outer layers are membrane sheets (11, 12) which are connected along their edges in a manner impervious to the flowing medium and the outer faces of which are exposed to the influx and wherein one or more inner sheet-shaped spacers (23 ; 21, 22) which render possible the outflow of permeate to one or more pad bores (5) passing through the layers centrally are present as inner layers, characterised in that all the layers (11, 12 ; 23, 21, 22) of the membrane pad consist of substances the melting points of which are close to one another and that all the layers have the same area and are continuously welded to one another in a marginal zone (4) extending all round.

2. A membrane pad according to Claim 1, characterised in that, with two spacers (21, 22), a layer of separating sheet (3) having the same ares is provided being disposed centrally in between them. ·

3. A membrane pad according to Claims 1 and 2, characterised in that the central separating sheet (3) has a greater surface hardness than the adjacent spacers (21, 22).

4. A membrane pad according to Claims 1 to 3, characterised in that the marginal welding (4) is a welding seam produced by ultrasonics.

5. A membrane pad according to Claims 1 to 4, characterised in that the spacers (21, 22) are formed from a layer of plastics material, woven fabric or fleece.

6. A membrane pad according to Claim 5, characterised in that the layer of woven fabric or fleece has a thread thickness and a mesh width of the order of magnitude of about 200 microns.

7. A membrane pad according to Claims 1 to 6, characterised in that the rectangular area has a format of a x a x n and that the n through discharge bores (5) disposed centrally are arranged with a mutual spacing a and a spacing a/2 from the edge, n being an integral value and preferably being 2.

## Revendications

1. Coussin à membranes pour le dessalement d'eau par osmose inverse, par ultrafiltration, par hyperfiltration, par perméation de gaz ou analogue, se composant de couches de forme rectangulaire qui sont placées à plat l'une sur l'autre, les deux couches extérieures étant constituées par des feuilles de membranes (11, 12) qui sont reliées de façon étanche au fluide en écoulement le long de leurs bords et dont les surfaces extérieures sont soumises à l'écoulement entrant, et dans lequel un ou plusieurs organes d'espacement en forme de feuilles (23 ; 21, 22) disposés sous la forme de couches intérieures, permettent la décharge du perméat jusqu'à un ou plusieurs trous (5) ménagés au milieu dans le coussin et traversant les couches, caractérisé en ce que toutes les couches (11, 12 ; 23, 21, 22) du coussin à membranes sont constituées de matières dont les points de fusion sont proches l'un de l'autre et en ce que toutes les couches ont des surfaces égales et sont soudées entre elles de façon continue dans une zone marginale (4) s'étendant sur la périphérie. ·

2: Coussin à membranes selon la revendication 1, caractérisé en ce que, dans le cas de deux organes d'espacement (21, 22), il est prévu une couche d'une feuille séparatrice (3) de même surface qui est disposée au milieu entre eux.

3. Coussin à membranes selon les revendications 1 et 2, caractérisé en ce que la feuille séparatrice centrale (3) a une plus grande dureté superficielle que les organes d'espacement adjacents (21, 22).

4. Coussin à membranes selon les revendications 1 à 3, caractérisé en ce que la soudure marginale (4) est un joint soudé qui est produit par ultrasons.

5. Coussin à membranes selon les revendications 1 à 4, caractérisé en ce que les organes d'espacement (21, 22) sont constitués par une couche de matière plastique, de tissu ou de voile.

6. Coussin à membranes selon la revendication 5, caractérisé en ce que la couche de tissu ou de voile a une épaisseur de fil et une largeur de mailles d'un ordre de grandeur d'environ 200 microns.

7. Coussin à membranes selon les revendications 1 à 6, caractérisé en ce que la surface rectangulaire a un format a x a x n et les n trous de décharge (5), traversants et disposés au milieu, sont répartis avec un espacement mutuel a et un espacement du bord a/2, n étant un nombre entier et de préférence égal à 2.

FIG.2

FIG.3

FIG.1

0 129 663